Europäisches Patentamt

European Patent Office

Office européen des brevets

(11) Publication number: **0 227 621**
**B1**

# EUROPEAN PATENT SPECIFICATION

(45) Date of publication of patent specification: **11.10.89**

(21) Application number: **86850421.8**

(22) Date of filing: **04.12.86**

(51) Int. Cl.⁴: **F 42 C 1/14,** F 42 B 13/10, F 16 B 7/16

(54) Locking unit for a movable distance device.

(30) Priority: **16.12.85 SE 8505936**

(43) Date of publication of application:
**01.07.87 Bulletin 87/27**

(45) Publication of the grant of the patent:
**11.10.89 Bulletin 89/41**

(84) Designated Contracting States:
**DE FR GB**

(56) References cited:
EP-A-0 155 137
CH-A- 561 858
FR-A- 411 159
FR-A-1 076 283
FR-A-1 218 767
GB-A-2 094 392

(73) Proprietor: **Affärsverket FFV**
**S-631 87 Eskilstuna (SE)**

(72) Inventor: **Sundvall, Kenneth**
**PI 812**
**S-635 20 Eskilstuna (SE)**

(74) Representative: **Hedefält, Dag et al**
**Försvarets Civilförvaltning Patentenheten**
**Östermalmsgatan 87 Box 80012**
**S-104 50 Stockholm (SE)**

Courier Press, Leamington Spa, England.

## Description

Technical Field

The present invention refers to distance devices, which are used together with shells, principally of the hollow charge type, in order to achieve a certain distance (stand-off) between the point where the ignition of the explosive charge is effected and the target.

When using shells of the burster type the distance aims at achieving detonation before hitting the ground or before striking the target. When using shells of the hollow charge type the distance aims at achieving a fully developed hollow charge jet.

Background Art

Accordingly when using hollow charged shells it is important that the hollow charge jet is given the opportunity to be fully developed in order to attain an optimal effect in the target. This is achieved by causing the charge to ignite at a certain distace before the shell reaches the target. The theoretical optimum of the distance is 6—8 calibres which at a calibre of 15 cm should correspond to a distance of maximum 120 cm. From a ballistic point of view one cannot tolerate distance devices that long, but the choise of their length is chosen with respect to the practical use, the ballistical properties and the optimal development of the hollow charge jet. The ignition system is preferably electromechanic which causes that parts of the electric ignition system must be placed a short distance in front of the charge, i.e. in the front end of the distance device.

A disadvantage about existing distance fused devices is that they can not be made long enough without being practically cumbrous in the field.

It has previously been suggested that a distance device should be designed telescopically so that the device should be protruded in several sections to its full length just as the shell has left the barrel. The disadvantages of such a layout are that the design is too heavy in consideration of its function and practice. Besides, this construction is too complicated concerning the locking of the sections and the layout of the electrical system in the distance device. An example of a single section telescoping device is disclosed by FR—A—1218767.

The purpose of the Invention

The purpose of the present invention is to eliminate the disadvantages previously mentioned and to produce a locking mechanism influenced by acceleration for a movable distance device for the fuse of a shell e.g. of the hollow charge type.

Summary of the Invention

The purpose mentioned above is achieved by the characteristics of the device as presented in the attached claims. In the following, a distance device means the device arranged in front of and in connection with the front casing or the cover of the shell possibly as a part of the fuse of the shell. The invention relates to a distance device shaped as a cylindrical tube which can telescope into the outer casing of the shell in order to minimize the total length of the shell during transport. See FR—A—1218767. When the shell is being primed the tube is pulled out of the outer casing and is locked to the outer casing.

The locking mechanism according to the invention is based upon the desirability when using a movable distance device together with a fuse, of preventing the distance device to move considerably in relation to the rest of the body of the shell. The present invention consequently concerns a mechanism to ensure that after the moment of ejection the distance device will not move towards the body of the shell a longer distance than what is acceptable in the consideration of function and safety.

Brief Description of the Drawings

The invention will now be further described by working examples with numerals referring to the relevant parts of the drawings.

Figure 1 shows a cross section through an electromechanic fuse provided with an axially movable distance device in its elongated position in a hollow charge shell.

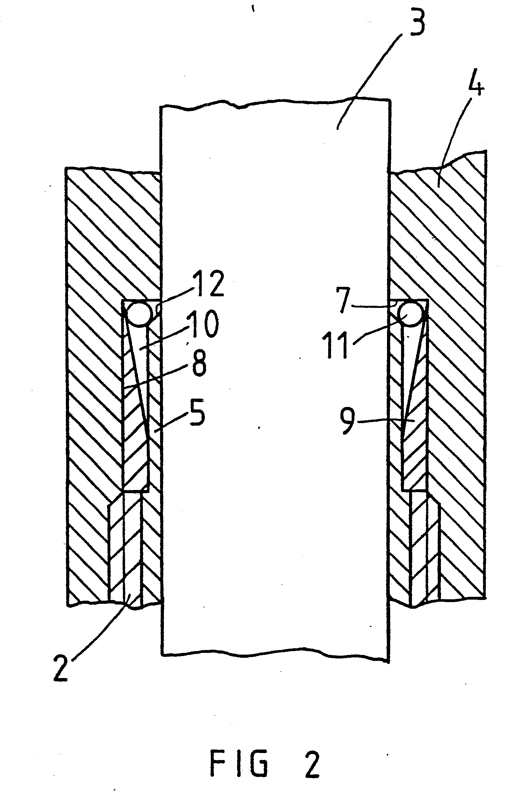

Figure 2 shows an embodiment of the locking mechanism according to the invention.

Description of the Invention

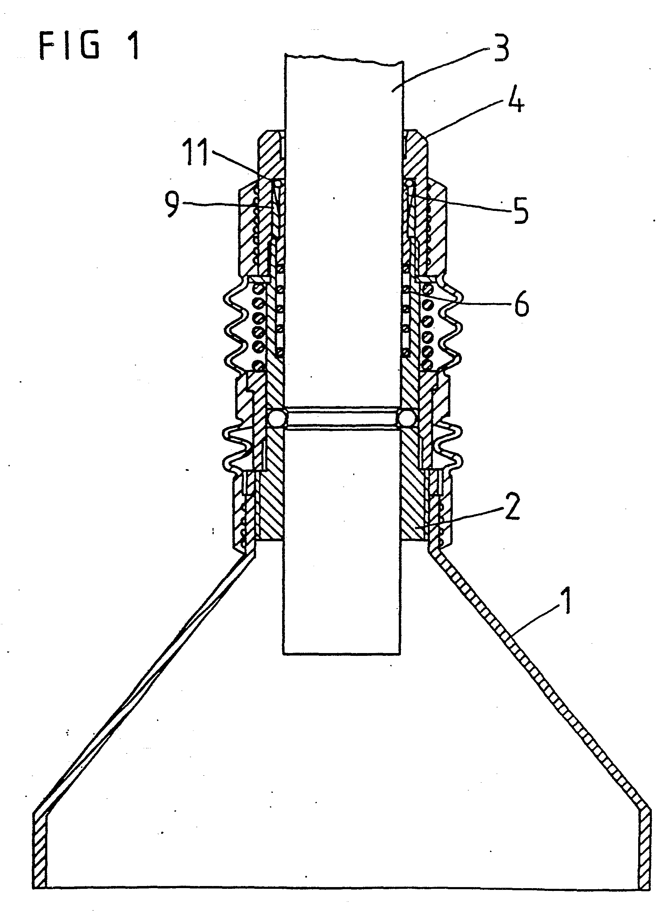

The fuse according to figure 1 is built up by an outer casing 1 in which a guide tube 2 is arranged. In the front end of the guide tube 2 a conical ring sleeve 4 is arranged. In an annular inner cavity 8 in the conical ring sleeve 4 a wedge ring 5 is arranged around the distance device 3. The cavity 8 could also be made directly in the front part of the guide tube 2. The wedge ring 5 is influenced forwards by a compression spring 6, i.e. forces the wedge ring 5 to slide forwards along the distance device 3 towards a collar 7 in the conical ring sleeve 4. The collar 7 is formed by the front limiting surfce of the annular inner cavity 8 of the conical ring sleeve 4. Furthermore in the cavity 8, between the wedge ring 5 and the conical ring sleeve 4 an internally conically backwards converging conical ring 9 is arranged, which conical ring 9 is intended to achieve a wedge-shaped chamber 10 in the cavity 8. In this backwardly tapering wedge-shaped chamber 10 a number of balls 11 are mounted. Each ball 11 in its unlocked position is in contact with the front camfered surface 12 of the wedge ring 5. This chamfered surface 12 forces the balls 11 out of contact with the distance device 3 when the wedge ring 5 is moving forwards. In this position the distance device 3 can consequently be moved either forwards or backwards. Each ball 11 is furthermore in contact with the collar 7 of the conical ring sleeve 4 and with the front part of the conical surface of the conical ring 9.

The way this locking mechanism functions is that the distance device 3 is manually pulled out before the loading of the shell. At the ejection moment the parts of the shell is influenced by a powerful acceleration whereby the forces of inertia cause the distance device 3 and the wedge ring 5 to move backwards in relation to the remaining parts of the shell. When the wedge ring 5 compresses the compression spring 6, the balls 11 are released whereby these too are pressed backwards by the forces of inertia in the converging wedge shaped chamber 10. The wedge ring 5 does not any longer lift the balls 11 out of contact with the distance device 3. Consequently the balls 11 are pressed backwards in the converging wedge shaped chamber 10 until the balls 11 are wedged between the distance device 3 and the conical ring 9.

Consequently the diameter of the balls 11 is smaller than the wedge shaped chamber 10 in the front part of the chamber and the diameter of the balls 11 is greater than the wedge shaped chamber 10 in the rear part of the chamber. Thereby the distance device 3 is locked by the balls 11 and the conical ring 9 to the conical ring sleeve 4.

Hereby the distance device can be made of a material softer than the balls, whereby a certain penetration of the balls into the distance device is made. The conical ring too can be made of a material softer than the balls whereby a penetration of the balls is also obtained in the conical ring. An advantage of this embodiment is that an irreversible locking can be obtained of the distance tube in relation to the conical ring sleeve and thereby the remaining parts of the shell.

Another embodiment is obtained by removing the wedge ring 5 with its compression spring from the first embodiment described so that the balls 11 even in an unlocked position are in contact with the distance device 3. The cavity 8 is hereby being made smaller and is used only for containing the conical ring 9 and the balls 11. In this embodiment the distance device cannot be pushed back into the fuse after elongation as the balls 11 then will lock the distance device 3.

Another embodiment can be obtained by providing the guide tube with an internally conically converging surface in order to eliminate the need of both a separately used conical ring and a conical ring sleeve.

Further embodiments can be made by varying the design of the conical ring sleeve 4 and the guide tube 2. For example the guide tube 2 and the conical ring sleeve 4 can be one element in which the conical ring 9 and the wedge ring 5 are locked in its position by a check nut or the like at the front part of the element.

## Claims

1. Locking unit for a movable distance device (3) used together with a projectile wherein the distance device (3) is cylindrically formed and axially movable in a guide tube (2) in the front part of the projectile characterised in that the guide tube (2) has an annular cavity (8) facing the distance device (3) and that a backwardly converging conical surface facing the distance device (3) is arranged in the cavity (8) and that the cavity (8) in its front part is mounted with a number of balls (11) which when moving backwardly in the formed conically wedge-shaped chamber (10) lock the distance device (3) in relation to the guide tube (2).

2. Locking unit as in claim 1, characterized in that a wedge ring (5) is slidably mounted on the distance device and interposed in the cavity (8) and that the wedge ring (5) from a forwardly directed force moves the balls (10) out of contact with the distance device (3).

3. Locking unit as in claim 2, characterized in that the wedge ring (5) in order to bring the balls (11) out of contact with the distace device (3) is equipped with a chamfered outer front surface (12) converging forwardly.

4. Locking unit as in any of the previous claims, characterized in that the diameter of the balls (11) is smaller than the wedge-shaped chamber (10) in the front part of the chamber and that the diameter of the balls (11) is greater than the wedge-shaped chamber (10) in the rear part of the chamber.

5. Locking unit as in any of the previous claims, characterized in that the wedge-shaped chamber (10) is formed by a conical ring (9) with its inner conical surface mounted in the cavity (8).

## Patentansprüche

1. Sperreinheit für eine bewegliche Distanzvorrichtung (3), die zusammen mit einem Geschoß verwendet wird, worin die Distanzvorrichtung (3) zylindrisch ausgebildet und axial in einem Führungsrohr (2) im vorderen Teil des Geschosses beweglich ist, dadurch gekennzeichnet, daß das Führungsrohr (2) einen ringförmigen Hohlraum (8) aufweist, der der Distanzvorrichtung (3) gegenüberliegt und daß eine sich nach rückwärts neigende konische Oberfläche, die der Distanzvorrichtung (3) gegenüberliegt, in dem Hohlraum (8) angeordnet ist, und daß der Hohlraum (8) in weinem vorderen Teil mit einer Anzahl von Kugeln (11) versehen ist, die, wenn sie sich in der gebildeten konischen, keilförmigen Kammer (10) nach rückwärts bewegen, die Distanzvorrichtung (3) in Bezug auf das Führungsrohr (2) sperren.

2. Sperreinheit nach Anspruch 1, dadurch gekennzeichnet, daß ein Keilring (5) gleitfähig auf der Distanzvorrichtung (3) angebracht und in den Hohlraum (8) eingefügt ist und daß der Keilring (5) unter den Einfluß ener nach vorn gerichteten Kraft die Kugeln (10) mit der Distanzvorrichtung (3) außer Berührung bringt.

3. Sperreinheit nach Anspruch 2, dadurch gekennzeichnet, daß der Keilring (5) mit einer abgeschrägten äußeren Vorderfläche (12), die nach vorwärts konvergiert, versehen ist, um die Kugeln (11) mit der Distanzvorrichtung (3) außer Berührung zu bringen.

4. Sperreinheit nach einem der verhergehenden Ansprüche, dadurch gekennzeichnet, daß der Durchmesser der Kugeln (11) kleiner als die keilförmige Kammer (10) im vorderen Teil der Kammer ist und daß der Durchmesser der Kugeln (11) größer als die keilförmige Kammer (10) im rückwärtigen Teil der Kammer ist.

5. Sperreinheit nach einem der verhergehenden Ansprüche, dadurch gekennzeichnet, daß die keilförmige Kammer (10) durch einen konischen Ring (9) gebildet wird, wobei ihre innere konische Oberfläche im Hohlraum (8) angeordnet ist.

**Revendications**

1. Bloc de verrouillage destiné à un dispositif de distanciation mobile (3) utilisé sur un projectile, dans lequel le dispositif de distanciation (3) est réalisé sous une forme cylindrique et peut se déplacer axialement dans un tube de guidage (2) à la partie avant du projectile, bloc de verrouillage caractérisé en ce que le tube de guidage (2) comporte une cavité annulaire (8) venant en face du dispositif de distanciation (3), en ce qu'une surface conique convergeant vers l'arrière et faisant face au dispositif de distanciation (3) est disposée dans la cavité (8), et en ce qu'un certain nombre de billes (11) sont montées dans la partie avant de la cavité (8), de facon que ces billes, lorsqu'elles se déplacement vers l'arrière dans la chambre en forme de coin conique (10), verrouillent le dispositif de distanciation (3) par rapport au tube de guidage (2).

2. Bloc de verrouillage selon la revendication 1, caractérisé en ce qu'un anneau de cale (5) est monté en glissement sur le dispositif de distanciation (3) de manière à être interposé dans la cavité (8), et en ce que cet anneau de cale (5), sous l'action d'une force dirigée vers l'avant, déplace les billes (10) pour les écarter du contact avec le dispositif de distanciation (3).

3. Bloc de verrouillage selon la revendication 2, caractérisé en ce que l'anneau de cale (5), pour écarter les billes (11) du contact avec le dispositif de distanciation (3), est équipé d'une surface extérieure avant chanfreinée (12) convergeant vers l'avant.

4. Bloc de verrouillage selon l'une quelconque des revendications précédentes, caractérisé en ce que le diamètre des billes (11) est plus petit que la chambre en forme de coin (10) dans la partie avant de cette chambre, et en ce qu le diamètre des billes (11) est plus grand que la chambre en forme de coin (10) dans la partie arrière de cette chambre.

5. Bloc de verrouillage selon l'une quelconque des revendications précédentes, caractérisé en ce que la chambre en forme de coin (10) est constituée par un anneau conique (9) dont la surface intérieure conique est montée dans la cavité (8).

FIG 1

FIG 2